# NEUE EUROPÄISCHE PATENTSCHRIFT

(11) **EP 1 498 604 B2**
(45) Veröffentlichungstag und Bekanntmachung des Hinweises auf die Entscheidung über den Einspruch: **31.10.2012**
(45) Hinweis auf die Patenterteilung: 02.09.2009
(21) Anmeldenummer: 03016188.9
(22) Anmeldetag: 17.07.2003
(51) Int. Cl.: F03D 11/04, F03D 3/00

(54) **Windkraftanlage**
Wind power plant
Centrale d'énergie éolienne

(43) Veröffentlichungstag der Anmeldung: 19.01.2005
(73) Patentinhaber: Neuhäuser GmbH, 44532 Lünen (DE)
(72) Erfinder: Langer, Hagen, 44534 Lünen (DE)
(74) Vertreter: Nunnenkamp, Jörg

(56) Entgegenhaltungen:
- EP-A- 1 310 671
- WO-A-03/008803
- CA-A- 1 134 277
- DE-A- 3 405 466
- DE-C- 375 498
- DE-U- 29 510 415
- GB-A- 2 346 655

## Beschreibung

Die Erfindung betrifft eine Windkraftanlage, mit wenigstens zwei Rotorblättern, einer zugehörigen Ständerkonstruktion, einem Generator und einem als standardisierter Transportbehälter ausgebildeten transportablen Fundament.

Eine Windkraftanlage der eingangs beschriebenen Gestaltung wird in der DE 295 10 415 U1 beschrieben und dort als mobile Stromerzeugungseinrichtung bezeichnet. Der dortige Rotor ist mechanisch mit einem Generator verkoppelt und weist drei Rotorblätter auf. Darüber hinaus wird die Möglichkeit angesprochen, Einzelelemente des Mastes im Innern des als Container ausgeführten Transportbehälters aufzunehmen und für den Betrieb auszuschwenken.

Einen ebenfalls gattungsbildenden Stand der Technik liefert die WO 03/008803 A1. Hier dient der Container letztlich dazu, eine Wasserstofferzeugungsanlage aufzunehmen. Zusätzlich sind Solarzellen vorgesehen.

Der Stand der Technik kann nicht in allen Punkten befriedigen. So ist die Transportfähigkeit schon insofern eingeschränkt, als wenigstens der Generator inklusive Rotorblättern separat befördert werden muss (vgl. DE 295 10 415 U1). Im Rahmen der WO 03/008803 A1 muss die gesamte Windkraftanlage separat transportiert werden. Außerdem ist der Generator in den vorbeschriebenen Fällen jeweils in einer Nabe zur Aufnahme der Rotorblätter angeordnet und erschwert demzufolge den Aufbau der Ständerkonstruktion schon durch sein Gewicht. Hinzu kommt, dass der Generator durch seine exponierte Lage vor Umwelteinflüssen nicht geschützt werden kann.

Darüber hinaus werden weitere Windkraftanlagen beispielhaft in der DE 101 19 429 A1 bzw. der DE 100 65 548 A1 beschrieben. Die RU 2 009 372 C1 Stellt den nachstkommenden Stand der Technik dar.

Solche Windkraftanlagen haben sich grundsätzlich bewährt, stehen jedoch vor dem Problem, dass der Aufbau des Ständerwerkes bzw. der Ständerkonstruktion zumeist ein präzise gefertigtes Fundament erfordert. Das notwendige Know-how ist in vielen Gegenden, insbesondere Entwicklungsländern, nicht oder nur unzureichend vorhanden. Hier will die Erfindung insgesamt Abhilfe schaffen.

Der Erfindung liegt das technische Problem zugrunde, eine Windkraftanlage der eingangs beschriebenen Gestaltung so weiter zu entwickeln, dass der Aufbau einfach und zügig vonstatten geht, wobei dies auch in entlegenden Gegenden der Erde ohne entsprechend vorhandenes Know-how möglich sein soll.

Zur Lösung dieser technischen Problemstellung ist eine gattungsgemäße Windkraftanlage **dadurch gekennzeichnet, dass** der Transportbehälter den Generator vollständig umschließt und lediglich für den Transport zu einem Aufstellungsort zusätzlich die Ständerkonstruktion sowie die Rotorblätter in seinem Innern aufnimmt. Vorzugsweise ist das Rotorblatt in aufgebautem Zustand vertikal angeordnet und bildet einen H-Rotor.

Das heißt, der Generator ist in das Fundament eingebracht, so dass Fundament und Generator größtenteils eine vormontierte Transporteinheit bilden. Dadurch lassen sich bereits Fehlfunktionen, Beschädigungen etc. des Generator während des Transportes, beim Aufbau und beim Betrieb zuverlässig ausschließen. Dabei hat es sich grundsätzlich bewährt, das Fundament als Hohlkörper auszubilden. Denn hierdurch gelingt es, die Ständerkonstruktion und zumindest die Rotorblätter für den Transport im Innern zu bevorraten. Dann dient das Fundament gleichsam als Aufbewahrungsbehälter für wesentliche Teile der Windkraftanlage. Gleichzeitig kommt das Fundament seiner primären Aufgabe nach, nämlich im aufgebauten Zustand der Windkraftanlage sämtliche auf die Ständerkonstruktion einwirkenden Kräfte aufzunehmen.

Erfindungsgemäß übernimmt das Fundament also eine zweifache Funktion, nämlich zum Transport der Windkraftanlage eine Aufbewahrungsfunktion als Quasi-Transportbehälter und nach seiner Montage eine Stabilisierungsfunktion als Stabilisierungsgewicht für die Ständerkonstruktion inklusive Rotorblätter. Zu diesem Zweck mag das Fundament einen oder mehrere ausklappbare Arme zum Beschweren und/oder eine oder mehrere Aufnahmewannen für beispielsweise Schüttgut und/oder vergleichbare Stabilisierungselemente aufweisen. Die ausklappbaren Arme können beispielsweise mit Steinen,

Erde, Sand oder vergleichbaren Materialien beschwert werden, die am Aufstellungsort zumeist unbegrenzt verfügbar sind. Alternativ oder ergänzend ist es möglich, die beschriebene Aufnahmewanne mit Schüttgut, wie z. B. Steinen, Sand, etc. oder auch mit Wasser zu befüllen.

Das Fundament erlangt auf diese Weise erst am Aufstellungsort das notwendige Gewicht, um sämtliche auf die Windkraftanlage einwirkenden Kräfte aufnehmen zu können. Dadurch gelingt es, das Fundament transportabel auszugestalten.

So oder so sorgen die ausklappbaren Arme, die Aufnahmewanne oder die anderen Stabilisierungselemente dafür, dass das Fundament in montiertem Zustand der Windkraftanlage über das notwendige Gewicht verfügt, damit es seiner stabilisierenden Funktion nachkommt. Dabei mag die Aufnahmewanne bzw. mögen die mehreren Aufnahmewannen außen am Fundament oder auch in seinem Innern angebracht sein. Letzteres bietet den weiteren Vorteil, dass die Aufnahmewannen während des Transports der Windkraftanlage Bestandteile derselben aufnehmen können und nach der Montage als Aufnahmebehälter für beispielsweise Schüttgut oder Wasser fungieren.

Neben dem Generator bzw. Teilen desselben kann das Fundament - wie bereits beschrieben - ergänzend weitere Elemente beinhalten. Hierzu gehören nicht nur die Ständerkonstruktion bzw. ihre Teile und das Rotorblatt, welche lediglich zum Transport der Windkraftanlage in dem Fundament aufgenommen werden. Sondern es lassen sich weitere Elemente permanent einbringen, wie ein Motoraggregat, ein elektrischer Energiespeicher, eine Steuerungseinheit, eine Ausricht- und Messeinheit, ein Spannungswandler, ein Elektromotor eine Wasserpumpe etc..

Das Motoraggregat mag dafür sorgen, dass auch in windlosen Zeiten beispielsweise ausreichend elektrische Energie zur Verfügung steht, um eine Wasserpumpe zu betreiben. Auch ist es denkbar, das Motoraggregat in Kombination mit einer Seilwinde für den Aufbau der Windkraftanlage einzusetzen. Dann sorgt das Motoraggregat in Kombination mit der Seilwinde dafür, dass die Ständerkonstruktion auf dem Fundament errichtet werden kann.

Der elektrische Energiespeicher bzw. die mehreren Akkumulatoren mögen ebenfalls dazu dienen, windlose Zeiten zu überbrücken. Auch ist es denkbar, mit Hilfe eines solchen Energiespeichers Kommunikationsanlagen innerhalb des Fundamentes mit elektrischer Energie zu versorgen. Für die Steuerung der gesamten Anlage ist die Steuerungseinheit verantwortlich, die auch das Motoraggregat betreibt sowie für das elektrische Aufladen des Energiespeichers sorgt. Gleichzeitig stellt die Steuerungseinheit sicher, dass der Energiespeicher mittels einer oder mehrerer Solarzellen geladen wird. Ebenso übernimmt die Steuerungseinheit die entsprechende Ladefunktion bei Rückgriff auf ein Motoraggregat sowie gegebenenfalls externe Energieerzeuger wie Wasserkraftwerke, Bioanlagen, Erdwärme und weitere Windkraftanlagen.

Mit Hilfe der Ausricht- und Messeinheit kann sichergestellt werden, dass das Fundament die für den dachseitigen Aufbau der Ständerkonstruktion notwendige Horizontallage einnimmt. Das kann im einfachsten Fall mit integrierten Wasserwaagen erreicht werden. Auch eine Positionsbestimmung mit Hilfe einer GPS-Anlage (Global positioning system) ist denkbar und wird vom Erfindungsgedanken umfasst. Dabei besteht die ergänzende Möglichkeit, mit Hilfe der Steuerungsanlage oder der beschriebenen Kommunikationsanlage, die eine Einheit bilden können, die jeweilige Position der Windkraftanlage an eine Zentrale zu melden. Mit Hilfe der GPS-Anlage kann nicht nur die Position der Winkraftanlage im Ganzen festgestellt werden. Sondern das gilt auch für dort sich etwaig aufhaltende Personen.

Mit Hilfe des Spannungswandlers kann lokalen Erfordernissen hinsichtlich der erzeugten elektrischen Spannung seitens der Windkraftanlage, des Generators, des Motoraggregates oder auch des elektrischen Energiespeichers Rechnung getragen werden.

Anhand dieser Ausführungen wird deutlich, dass sich die Windkraftanlage gleichsam vormontiert im Fundament an den gewünschten Aufstellungsort transportieren lässt und mit Hilfe der vorhandenen Aggregate einfach aufgebaut werden kann. Dafür sorgt im einfachsten Fall die Seilwinde bzw. Seilzugmechanik, welche die Ständerkonstruktion auf dem Dach des Fundamentes aufrichtet. Zum Abschluss müssen lediglich noch das oder die Rotorblätter kopfseitig der Ständerkonstruktion angebraucht werden.

Dabei verfügt die Ständerkonstruktion vorzugsweise über eine Übertragungswelle für den Rotor, wobei die Übertragungswelle mit Hilfe einer Kupplung bzw. eines Drehgelenkes an eine Generatorwelle angeschlossen ist. Der abschließende Betrieb erfordert also lediglich noch die Herstellung der mechanischen Verbindung vom Rotor über die Übertragungswelle bis hin zur Generatorwelle. Weil der Generator wenigstens teilweise im oder am Fundament angeordnet ist, sind Beschädigungen durch eine Manipulation nicht zu befürchten. Vielmehr stellen Fundament und Generator eine vormontierte Baueinheit dar. Durch diese Variante entfällt auch das nicht einfache Anbringen des schweren Generators an den Rotorblättern bzw. kopfseitig der Übertragungswelle.

Wie bereits ausgeführt, enthält das Fundament in seinem Innern in der Regel sämtliche für den Betrieb der Windkraftanlage minimal erforderlichen Bauteile. Hierzu gehört insbesondere die Ständerkonstruktion ganz oder teilweise sowie die zumindest zwei Rotorblätter. Dabei hat es sich besonders bewährt, als Fundament einen standardisierten Transportbehälter einzusetzen. Vorzugsweise kommt als Transportbehälter ein handelsüblicher Container in den normierten Abmessungen zum Einsatz, welcher folgerichtig einfach und kostengünstig transportiert werden kann.

Schließlich hat es sich als günstig erwiesen, eine oder mehrere Solarzellen an der Ständerkonstruktion anzubringen. Diese Solarzellen können dafür sorgen, in windlosen Zeiten den elektrischen Energiespeicher aufzuladen bzw. dessen Ladungszustand beizubehalten. Außerdem mögen die Solarzellen für die elektrische Versorgung der Steuerungseinheit sorgen, welche die Kommunikation mit der Außenwelt bzw. der Zentrale sicherstellt. Ebenso ist es denkbar, dass die Solarzellen einzelne Minimalfunktionen der von der Windkraftanlage gespeisten Verbraucher aufrechterhalten; beispielsweise den Betrieb einer Wasserpumpe. - Die Ständerkonstruktion kann vorzugsweise klappbar an das Fundament angelenkt bzw. angeschlossen sein, vorzugsweise an seinen randseitigen Dachabschluss.

Im Ergebnis wird eine Windkraftanlage zur Verfügung gestellt, die zunächst einmal über ein transportables Fundament verfügt, welches erst am Aufstellungsort sein zur Übernahme einer ausreichenden Stabilisierungsfunktion für eine Windkraftanlage erforderliches Gewicht erhält. Außerdem werden wesentliche Komponenten der Windkraftanlage für den Transport im Fundament aufgenommen, welches regelmäßig als standardisierter Transportbehälter ausgeführt ist. Erst am Aufstellort werden die einzelnen Bestandteile der Windkraftanlage dem Transportbehälter bzw. Fundament entnommen.

Dachseitig des Fundamentes wird die Ständerkonstruktion aufgebaut, die an ihrer Spitze das oder die Rotorblätter trägt. Dabei hat es sich besonders bewährt, auf sog. H-Rotoren zurückzugreifen, wie sie in der DE 100 65 548 A1 beschrieben werden. Diese H-Rotoren zeichnen sich dadurch aus, dass sie bei einer Windbeaufschlagung eine im Wesentlichen vertikal angeordnete Übertragungswelle in Rotationen versetzen. Die Übertragungswelle arbeitet über das beschriebene Drehgelenk bzw. die Kupplung auf die gleichfalls im Wesentlichen vertikal angeordnete Generatorwelle, ohne das eine Richtungsumkehr vorgenommen werden muss. Das vereinfacht den Aufbau enorm und erhöht gleichzeitig den Wirkungsgrad. Alternativ hierzu kann das angegebene Drehgelenk auch nicht zur Kraftübertragung bei der Energieerzeugung genutzt werden. In diesem Fall dient es als Montagehilfe für die Welle oder insgesamt den Generator.

Dadurch, dass der Generator zumindest teilweise im Innern des Fundamentes angeordnet ist, sind Beschädigungen während des Transportes nahezu ausgeschlossen. Darüber hinaus wird der Generator in der Regel geschützt im Fundament aufgenommen, während lediglich die Generatorwelle ganz oder teilweise aus dem Fundament heraus geführt wird. Dadurch wird eine lange Standzeit des Generators erreicht.

Für den Aufbau der Windkraftanlage ist es lediglich erforderlich, die bereits angeflanschte Generatorwelle mit der Übertragungswelle zu verbinden, was über ein Drehgelenk mit in der Regel einer Schalenkupplung geschieht.

Weil die Solarzellen an der Ständerkonstruktion angebracht sind, verfügen sie hierdurch automatisch über eine exponierte Lage im Vergleich zum Boden, sind also vor Steinschlag oder anderen Beschädigungen wirksam geschützt. Tatsächlich finden sich die Solarzellen zumeist in einer Höhe von 3,4 oder noch mehr Metern. Ihre Funktionsweise ist also über eine lange Zeit gesichert. Das ist besonders vor dem Hintergrund von Interesse, als das Fundament bzw. der Transportbehälter ergänzend noch die Funktion einer Schutzhütte für Personen in ihrer Nähe übernehmen kann. Tatsächlich steht immer ausreichend Energie zur Verfügung, um wenigstens einen Notruf absetzen zu können. Selbstverständlich ist es auch denkbar, dass mit Hilfe einer Wasserpumpe wenigstens Trinkwasser zur Verfügung steht. Hierin sind die wesentlichen Vorteile zu sehen.

Im Folgenden wird die Erfindung anhand einer lediglich ein Ausführungsbeispiel darstellenden Zeichnung näher erläutert; es zeigen:
die Fig. 1 bis 2 verschiedene Ausführungsformen der erfindungsgemäßen Windkraftanlage,
Fig. 3 eine andere, nicht zur Erfindung gehörige Ausgestaltung

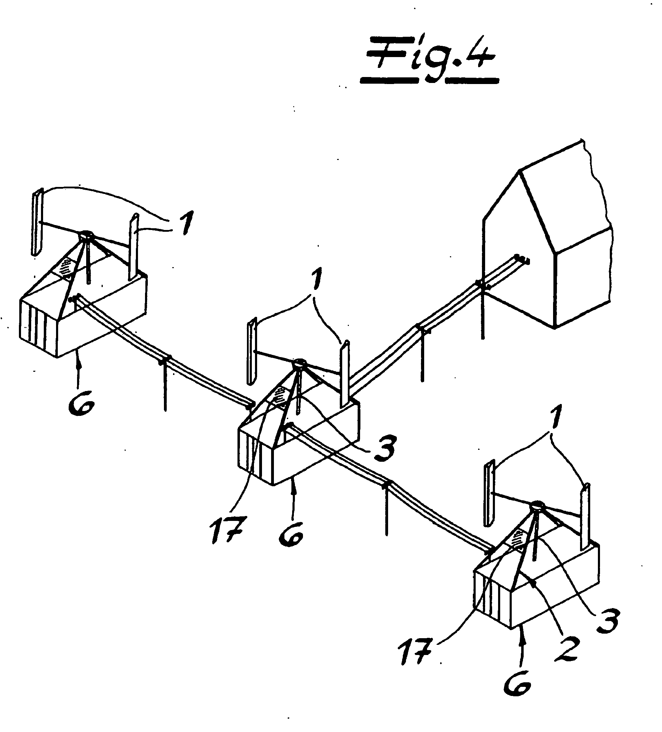

Fig. 4 die Kombination mehrerer Windkraftanlagen zu einem Kraftwerk und
Fig. 5 den Aufbau des Fundamentes mit Rotor im Detail.

In den Figuren ist eine Windkraftanlage dargestellt, die mit wenigstens zwei Rotorblätter 1 ausgerüstet ist. Im Rahmen des Ausführungsbeispiels sind zwei Rotorblätter 1 vorgesehen, welche von einer gemeinsamen Ständerkonstruktion 2 getragen werden. Anhand der Figuren erkennt man, dass die Rotorblätter 1 jeweils vertikal angeordnet sind und (jeweils) einen H-Rotor bilden.

Die Rotorblätter 1 drehen sich mit Abstand um eine gemeinsame vertikale Achse A. Diese vertikale Achse A fällt mit der Mittelachse der Ständerkonstruktion 2 zusammen. Auf der Achse A finden sich unterhalb des realisierten H-Rotors eine Übertragungswelle 3 und im Anschluss daran eine Generatorwelle 4, an die ein Generator 5 angeschlossen ist.

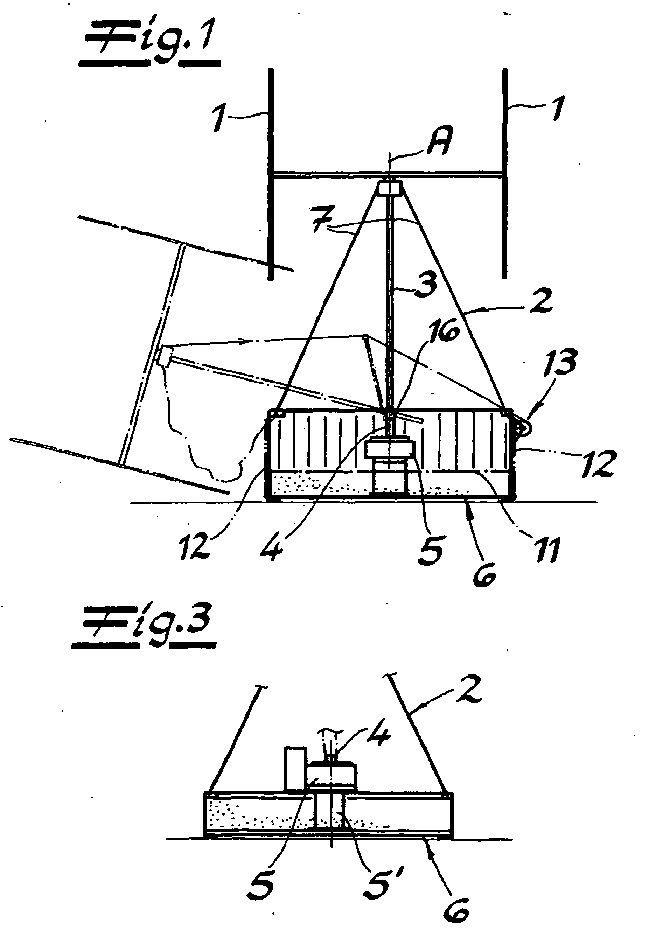

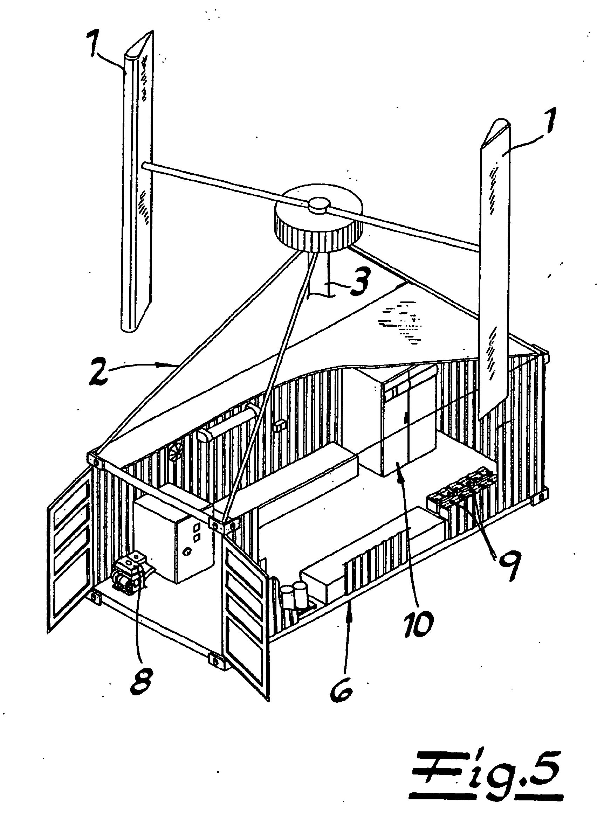

Die Ständerkonstruktion 2 wird von einem Fundament 6 getragen, welches bei der Variante nach den Fig. 1, 2 und 5 in seinem Inneren den Generator 5 vollständig aufnimmt. Lediglich dessen Generatorwelle 4 ist nach außen geführt. Anhand der Darstellung in der Fig. 3 erkennt man, dass das Fundament 6 den Generator 5 zumindest teilweise aufnimmt. Im dargestellten Beispiel ist lediglich ein Fuß 5', des Generators 5 in dem Fundament 6 verankert.

Erfindungsgemäß wird der Generator 5 jedoch vollständig von dem Fundament 6 umschlossen, welches als standardisierter Transportbehälter 6 ausgeführt ist. Neben dem Generator 5 nimmt das Fundament bzw. der Transportbehälter 6 die Rotorblätter 1 sowie die Ständerkonstruktion 2' für den Transport zu einem Aufstellungsort in seinem Innern auf.

Das gelingt besonders einfach für den Fall, dass die Ständerkonstruktion 2 entsprechend der Fig. 1 neben der Übertragungswelle 3 einzelne Seile bzw. Stäbe 7 aufweist, die an Eckpunkten dachseitig des Fundamentes bzw. Transportbehälters 6 verankert sind. Derartige Stäbe bzw. Seile 7 lassen sich problemlos innerhalb des Fundamentes bzw. Transportbehälters 6 für den Transport unterbringen. Das gilt auch für die Rotorblätter 1 und die Übertragungswelle 3, die beispielsweise mehrteilig ausgeführt sein kann.

Neben den Rotorblättern 1, dem Generator 5 und Teilen der Ständerkonstruktion 2 oder der Ständerkonstruktion 2 insgesamt sind im Fundament 6 zusätzliche Bestandteile der Windkraftanlage untergebracht. Hierzu gehören ein lediglich angedeutetes Motoraggregat 8, ein elektrischer Energiespeicher 9 sowie eine Steuerungseinheit 10. Nicht ausdrücklich gezeigt sind eine Ausricht- und Messeinheit, ein Spannungswandler, ein Elektromotor, eine Wasserpumpe etc..

Man erkennt darüber hinaus im Innern des Fundamentes 6 Aufnahmewannen 11 für beispielsweise Schüttgut oder Wasser. Diese Aufnahmewannen 11 können während des Transportes die Rotorblätter 1 aufnehmen und dienen nach der Aufstellung der Windkraftanlage am Aufbauort zur Stabilisierung der Ständerkonstruktion 2. Grundsätzlich mögen hierzu auch ausklappbare Arme 12 beitragen, die lediglich angedeutet sind.

Die ausklappbaren Arme 12 sind gelenkig an den Transportbehälter 6 angeschlossen und lassen sich am Aufstellungsort horizontal auf den Boden klappen und mit Erde, Steinen, Sand etc. beschweren. Sowohl die ausklappbaren Arme 12 als auch die gefüllten Aufnahmewannen 11 stellen sicher, dass die auf das Dach des Aufnahmebehälters 6 aufgebaute Ständerkonstruktion 2 mit den kopfseitigen Rotorblättern 1 über die nötige Stabilität verfügt.

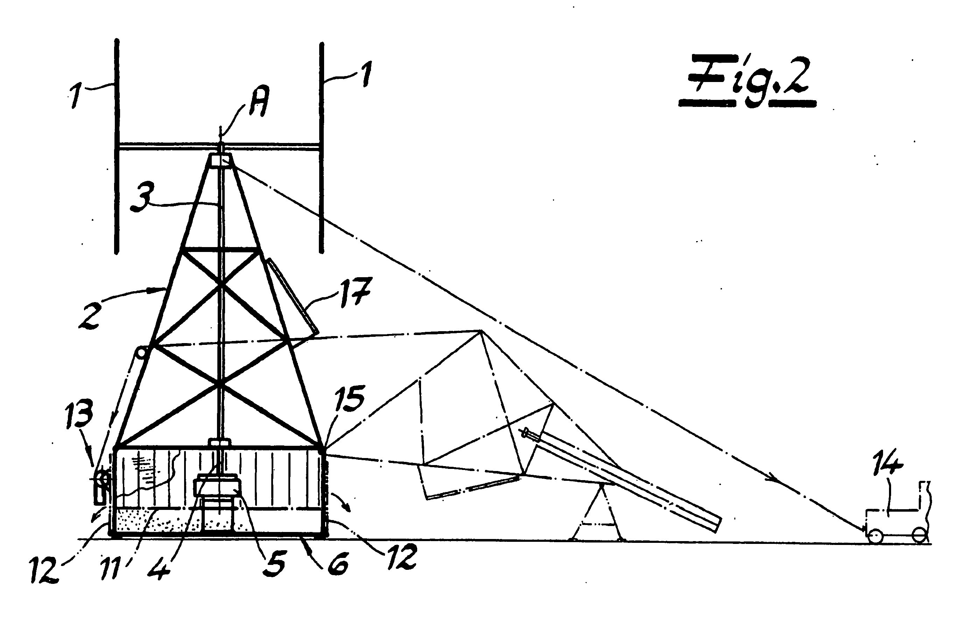

Anhand der Darstellungen erkennt man, dass es sich bei dem Fundament bzw. Transportbehälter 6 um einen standardisierten Transportbehälter 6 handelt, insbesondere einen Container mit normierten Abmessungen. Die strichpunktierten Umrisse in den Fig. 1 und 2 machen deutlich, wie sich die Ständerkonstruktion 2 mittels einer Seilwinde 13 auf dem Fundament 6 errichten lässt. Dazu kann die Seilwinde 13 von dem im Innern des Transportbehälters 6 angebrachten Motoraggregat 8 angetrieben werden. Auch ist es denkbar, die Ständerkonstruktion 2 mit Hilfe eines externen Fahrzeuges 14 aufzurichten.

In beiden Fällen ist die Ständerkonstruktion 2 drehgelenkig an das Fundament bzw. den Transportbehälter 6 angeschlossen, wobei im Rahmen der Darstellung nach Fig. 2 ein dach- und randseitig vorgesehenes Drehgelenk 15 zum Einsatz kommt, welches die dort als Ständerfachwerk ausgeführte Ständerkonstruktion 2 klappend aufnimmt und seine Errichtung ermöglicht. Dagegen wird im Rahmen der Fig. 1 so vorgegangen, dass lediglich die Übertragungswelle 3 hochgeschwenkt wird, wozu ein weiteres Drehgelenk bzw. eine Kupplung 16 zwischen der Generatorwelle 4 und der Übertragungswelle 3 vorgesehen ist. Selbstverständlich kann die Kupplung 16 nicht nur bei den klappbaren Varianten der Ständerkonstruktion 2 entsprechend den Fig. 1 und 2 verwirklicht werden. Sondern sie findet durchgängig Verwendung, um die Generatorwelle 4 mit der erst am Aufbauort anzubringenden Übertragungswelle 3 zu verbinden.

Zusätzlich sorgen ein oder mehrere Solarzellen 17 dafür, dass auch in windlosen Zeiten genügend Strom beispielsweise zum Betrieb der Steuerungseinheit 10 sowie zum Laden des elektrischen Energiespeichers 9 zur Verfügung steht.

Die beiden Rotorblätter 1 mögen aus Stabilitäts- und Gewichtsgründen aus einem Metallschaum in ihrem Innern aufgebaut sein. Dieser Metallschaum trägt eine äußere Beplankung aus Kunststoff- oder Aluminiumplatten, die das Profil der Rotorblätter 1 vorgeben. Dabei mag der Metallschaum so hergestellt sein, wie dies in der DE 199 39 518 A1 beschrieben wird.

## Patentansprüche

1. Windkraftanlage, mit wenigstens zwei Rotorblättern (1), einer zugehörigen Ständerkonstruktion (2), einem Generator (5) und einem als standardisierter Transportbehälter (6) ausgebildeten transportablen Fundament (6), **dadurch gekennzeichnet, dass**
- der Transportbehälter (6) den Generator (5) vollständig umschließt und lediglich für den Transport zu einem Aufstellungsort zusätzlich die Ständerkonstruktion (2) sowie die Rotorblättern (1) in seinem Innern aufnimmt.

2. Windkraftanlage nach Anspruch 1, **dadurch gekennzeichnet, dass** das Fundament (6) als Hohlkörper ausgebildet ist und weitere Bestandteile der Windkraftanlage in unmontiertem Zustand aufnimmt.

3. Windkraftanlage nach Anspruch 1 oder 2, **dadurch gekennzeichnet, dass** das Fundament (6) einen oder mehrere ausklappbare und beschwerbare Arme (12) und/oder eine oder mehrere Aufnahmewannen (11) für Schüttgut und/oder Wasser aufweist.

4. Windkraftanlage nach einem der Ansprüche 1 bis 3, **dadurch gekennzeichnet, dass** das Fundament (6) ergänzend weitere Elemente wie ein Motoraggregat (8) einen elektrischen Energiespeicher (9), eine Steuerungseinheit (10), eine Ausricht- und Messeinheit, einen Spannungswandler, einen Elektromotor, eine Wasserpumpe etc. aufnimmt.

5. Windkraftanlage nach einem der Ansprüche 1 bis 4, **dadurch gekennzeichnet, dass** das Fundament (6) in seinem Innern sämtliche für den Betrieb der Windkraftanlage erforderlichen Bauteile während des Transportes bevorratet.

6. Windkraftanlage nach einem der Ansprüche 1 bis 5, **dadurch gekennzeichnet, dass** der standardisierte Transportbehälter (6) als Container (6) ausgebildet ist.

7. Windkraftanlage nach einem der Ansprüche 1 bis 6, **dadurch gekennzeichnet, dass** die Ständerkonstruktion (2) eine Übertragungswelle (3)für den Rotor (1) aufweist, wobei die Übertragungswelle (3) über eine Kupplung (16) an eine Generatorwelle (4) angeschlossen ist.

8. Windkraftanlage nach einem der Ansprüche 1 bis 7, **dadurch gekennzeichnet, dass** die Ständerkonstruktion (2) mittels einer Seilwinde (13) auf dem Fundament (6) errichtet wird.

9. Windkraftanlage nach einem der Ansprüche 1 bis 8, **dadurch gekennzeichnet, dass** eine oder mehrere Solarzellen (17) an der Ständerkonstruktion (2) angebracht sind.

## Claims

1. A wind powerplant, with at least two rotor blades (1), a related mast structure (2), a generator (5) and a transportable base (6) designed as a standardised transport container (6),
**characterised in that** the transport container (6) completely encloses the generator (5) and merely for transport to an erection site additionally accommodates the mast structure (2) as well as the rotor blades (1) in its interior.

2. The wind powerplant according to Claim 1,
**characterised in that** the base (6) is designed as a hollow body and in the uninstalled state accommodates further components of the wind powerplant.

3. The wind powerplant according to Claim 1 or 2,
**characterised in that** the base (6) has one or a plurality of arms that can fold out and be weighed down and/or one or a plurality of reception troughs (11) for bulk solids and/or water.

4. The wind powerplant according to one of the Claims 1 to 3,
**characterised in that** the base (6) additionally accommodates further elements such as an engine unit (8), an electrical energy store (9), a control unit (10), an alignment and measurement unit, a voltage converter, an electric motor, a water pump, etc.

5. The wind powerplant according to one of the Claims 1 to 4,
**characterised in that** the base (6) stores in its interior during transport all the components required for operation of the wind powerplant.

6. The wind powerplant according to one of the Claims 1 to 5,
**characterised in that** the standardised transport container (6) is designed as a container.

7. The wind powerplant according to one of the Claims 1 to 6,
**characterised in that** the mast structure (2) has a transmission shaft (3) for the rotor (1), wherein
the transmission shaft (3) is connected via a coupling (16) to a generator shaft (4).

8. The wind powerplant according to one of the Claims 1 to 7,
**characterised in that** the mast structure (2) is erected on the base (6) by means of a cable winch (13).

9. The wind powerplant according to one of the Claims 1 to 8,
**characterized in that** one or a plurality of solar cells (17) are fitted to the mast structure (2).

## Revendications

1. Eolienne comprenant au moins deux lames de rotor (1), une construction de montants (2) correspondante, un générateur (5) et une base (6) transportable formée comme un contenant de transport (6) standardisé, **caractérisée en ce que** le contenant de transport (6) entoure complètement le générateur (5) et reçoit en plus en son intérieur la construction de montants (2) ainsi que les lames de rotor (1) seulement pour le transport vers un lieu d'installation.

2. Eolienne selon la revendication 1, **caractérisée en ce que** la base (6) est un corps creux et reçoit d'autres composants non montés de l'éolienne.

3. Eolienne selon la revendication 1 ou 2, **caractérisée en ce que** la base (6) présente un ou plusieurs bras (12) escamotables et pouvant être lestés et/ou une ou plusieurs cuve(s) de réception (1) pour des matériaux en vrac et/ou de l'eau.

4. Eolienne selon l'une des revendications 1 à 3, **caractérisée en ce que** la base (6) reçoit en complément d'autres éléments comme un bloc moteur (8), un accumulateur d'énergie électrique (9), une unité de commande (10), une unité de positionnement et de mesure, un transformateur de tension, un moteur électrique, une pompe à eau, etc.

5. Eolienne selon l'une des revendications 1 à 4, **caractérisée en ce que** la base (6) conserve en son intérieur durant le transport l'ensemble des pièces nécessaires pour le fonctionnement de l'éolienne.

6. Eolienne selon l'une des revendications 1 à 5, **caractérisée en ce que** le contenant de transport (6) standardisé est un conteneur (6).

7. Eolienne selon l'une des revendications 1 à 6, **caractérisée en ce que** la construction de montants (2) présente un arbre de transmission (3) pour le rotor (1), l'arbre de transmission (3) étant raccordé à un arbre de générateur (4) par un accouplement (16).

8. Eolienne selon l'une des revendications 1 à 7, **caractérisée en ce que** la construction de montants (2) est érigée sur la base (6) au moyen d'un treuil (13).

9. Eolienne selon l'une des revendications 1 à 8, **caractérisée en ce qu'**une ou plusieurs cellules solaires (17) est/sont placée(s) sur la construction de montants (2).
